(19) Europäisches Patentamt
European Patent Office
Office européen des brevets

(11) EP 2 402 395 A2

(12) EUROPEAN PATENT APPLICATION

(43) Date of publication:
**04.01.2012 Bulletin 2012/01**

(21) Application number: **11171636.1**

(22) Date of filing: **28.06.2011**

(51) Int Cl.:
***C08L 63/00*** (2006.01)
***C08G 59/68*** (2006.01)
***C08K 3/04*** (2006.01)
***H01R 4/04*** (2006.01)
***C09J 163/00*** (2006.01)
***C08K 3/10*** (2006.01)
***H01B 1/12*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.06.2010 US 359540 P**

(71) Applicant: **Dow Global Technologies LLC**
**Midland, MI 48674 (US)**

(72) Inventors:
- **Wilson, Mark B.**
  **Clute, TX Texas 77531 (US)**
- **Larsen, Travis H.**
  **Houston, TX Texas 77021 (US)**

(74) Representative: **Buckley, Guy Julian**
**Patent Outsourcing Limited**
**1 King Street**
**Bakewell**
**Derbyshire DE45 1DZ (GB)**

(54) **Curable compositions**

(57) A conductive curable resin composition including (a) at least one vinylarene oxide, (b) at least one curing agent, and (c) at least one conductive filler; a process for making the above curable resin composition; and a cured resin composition made therefrom. The curable resin composition when cured produces a thermoset having a higher heat resistance after cure than analogous prior art compositions. The curable compositions of the present invention are advantageously useful, for example, as a die attach adhesive for semiconductor packaging material thermoset materials.

EP 2 402 395 A2

## Description

### BACKGROUND OF THE INVENTION

This application claims the benefit of priority under 35 U.S.C. §119(e) to U.S. Provisional Application No. 61/359,540, filed June 29, 2010.

### Field of the Invention

The present invention is related to epoxy-based conductive curable compositions and a process for preparing such compositions. More specifically, the present invention relates to an epoxy resin composition based on vinylarene oxide useful for the manufacture of conductive thermosets.

The compositions of the present invention may be used as an adhesive in conductive applications.

### Description of Background and Related Art

Heretofore, epoxy resin compositions have been utilized for conductive applications. For example, U.S. Patent No. 5,929,141 discloses the use of polyepoxide resins and compositions therefrom for preparing a flexible (less than 45 Shore D) cured product intended for use in conductive applications. However, the compositions of the above patent, have the disadvantage of utilizing resins with a high (150 - 2000 ppm) hydrolyzable chloride content which can impart poor performance properties to the resulting cured product at high temperature (60 °C+) and/or high humidity (60%+).

Other references that disclose the use of resins having a disadvantageous high level of hydrolyzable chloride include, for example, EP1701361B1 which discloses the use of acrylic and epoxy blends for low stress conductive adhesives; U.S. Patent No. 7,405,247 which discloses the use of a hybrid polymer network resulting in a reworkable conductive adhesive; U.S. Patent No. 7,018,701 which discloses the use of a polyolefin elastomer for conductive films in semiconductor packaging applications; and U.S. Patent No. 5,575,956 which discloses the use of a flexible epoxy polymer for use in conductive adhesive applications.

Standard glycidyl ether resins prepared by the reaction of phenolic or amino functional building blocks with epichlorohydrin can also be used in conductive compositions. However, these standard resins are disadvantaged due to the comparatively high level of hydrolyzable chlorides in such resins. For example, diglycidyl ether of bisphenol A or diglycidyl ether of bisphenol F resins can contain undesirable hydrolyzable chloride levels of from 150 ppm to 2000 ppm as measured via ion chromatography.

It is also known to manufacture resins, such as cycloaliphatic epoxy resins, containing a low hydrolyzable chloride content (<~5 ppm), without the use of epichlorohydrin. Cycloaliphatic epoxy resins can be used alone, or along with conventional glycidyl ether resins, in applications requiring high purity (low ionic contamination); and cycloaliphatic resins are made without the use of epichlorohydrin resulting in a low hydrolyzable chloride content (<~5 ppm) resin. However, the use of cycloaliphatic resins is limited by the type of curing agent that can be used in the formulation, i.e., the curing agent for the cycloaliphatic resins is restricted to anhydride or Lewis acid curing agents.

### SUMMARY OF THE INVENTION

The present invention is directed to providing an epoxy resin composition that (1) can be made without using epichlorohydrin, (2) can be used with a wide range of curing agents including amines, phenolics, phenyl esters, anhydrides adapted for tunable thermomechanical properties (for example Tg), (3) contains low to no extractable halides (e.g. <10 ppm halides), and (4) can contain a high filler loading (e.g. >30 % by volume filler loading) while maintaining low viscosity (e.g. <50 Pa-s at 25 °C at 10 $sec^{-1}$).

The present invention is advantageous over prior art because the resin component of the present invention imparts very low hydrolyzable chloride levels (e.g. <1 ppm) to the curable composition of the present invention.

The present invention is directed to preparing epoxy-based conductive thermoset formulations or compositions utilizing a divinylarene dioxide such as divinylbenzene dioxide as a component in high performance thermoset systems intended for use where high thermal conductivity (>1.2 W/mK) and/or low volume resistivity (e.g. <0.005 ohm-cm) and good process ability in the final application is required. The incorporation of the resin of the present invention enables resultant systems with high filler loading (e.g. >30% by volume), tunable glass transition temperatures (Tg) (e.g. 70 °C to 225 °C), and low to no extractable (e.g. <10 ppm) halogen content, i.e., a very low to no extractable (e.g. <1 ppm) ionic contamination imparted by the resin. In addition, the use of the present invention resin, in turn, enables the use of a wide variety of curing agents, i.e., a number of different curing agents can be used, in the resultant thermoset system, unlike conventional cycloaliphatic epoxy resins.

In one embodiment, a diepoxide derivative of a divinylarene resin such as divinylbenzene is utilized in an epoxy-based conductive thermoset formulation. The resin of the present invention is particularly suitable for use in thermal interface adhesives, die attach adhesive, and printed or jetted ink formulations. The comparatively low ionic contamination (e.g. <1 ppm $Cl^-$) results from the synthetic route to manufacture the molecule which does not utilize halogenated intermediates, e.g. epichlorohydrin. The use of conventional cycloaliphatic resins with low to no chloride content is limited by suitable curing chemistries which are primarily anhydride or Lewis acid curing agents. It would therefore be desired to develop and incorporate epoxy resins with low viscosity, and very low to no chloride content which can be cured with a wide range of epoxy curing agents while enabling tunable thermomechanical properties and increased filler loading for improved conductivity, either electrical and/or thermal.

The resin of the present invention can be used as the sole resin or as an additive (diluent) in a resin formulation. The use of the present invention resin imparts improved properties (e.g., thermal resistance, volume resistivity) over conventional glycidyl ether or glycidyl ester epoxy resins. The present invention resin's unique combination of low viscosity (e.g. <0.020 Pa-s at 25 °C) in the uncured state, and tunable $T_g$ after cure (e.g. ~80 °C to 225 °C), enables new formulation strategies. In addition, the ability to cure the present invention resin with an expanded curing agent range, offers the formulator significantly wider formulation latitude over cycloaliphatic type resins. Low to no extractable halogen content is desirable to maintain package or device performance in high humidity reliability (e.g. 85 % relative humidity, 85 °C) testing and field use over the lifetime of the device. In addition, the comparatively low viscosity (e.g. <0.020 Pa-s at 25 °C) enables higher filler loadings and smaller fillers to be used compared to standard glycidyl ether resins, such as diglycidyl ether of bisphenol A or diglycidyl ether of bisphenol F at viscosities of about 2.0 to about 15.0 Pa-s at 25 °C.

## DETAILED DESCRIPTION OF THE INVENTION

One broad aspect of the present invention comprises an epoxy-based conductive curable vinylarene oxide resin composition including (a) at least one vinylarene oxide, (b) at least one curing agent, (c) at least one conductive filler; and (d) optionally, at least one catalyst.

The vinylarene oxide, component (a), useful in the present invention may comprise, for example, any substituted or unsubstituted arene nucleus bearing one, two, or more vinyl groups in any ring position. Preferably, the arene nucleus has two vinyl groups. For example, the arene portion of the vinylarene oxide may consist of benzene, substituted benzenes, (substituted) ring-annulated benzenes or homologously bonded (substituted) benzenes, or mixtures thereof. When the vinylarene portion of the vinylarene oxide has two vinyl groups, such groups may be *ortho, meta,* or *para* isomers or any mixture thereof. Additional substituents may consist of $H_2O_2$-resistant groups including saturated alkyl, aryl, halogen, nitro, isocyanate, or RO- (where R may be a saturated alkyl or aryl). Ring-annulated benzenes may consist of naphthlalene, tetrahydronaphthalene, and the like. Homologously bonded (substituted) benzenes may consist of biphenyl, diphenylether, and the like.

The vinylarene oxide used for preparing the composition of the present invention may be illustrated generally by general chemical Structures I-IV as follows:

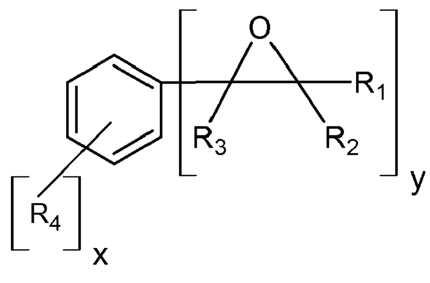

Structure I

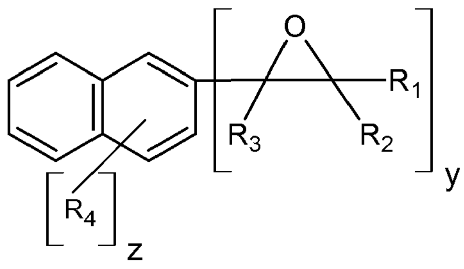

Structure II

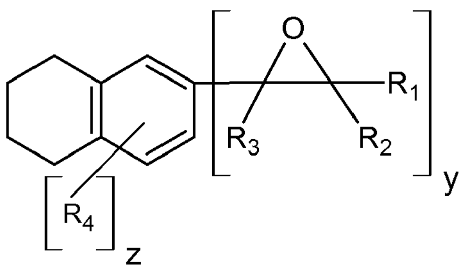

Structure III

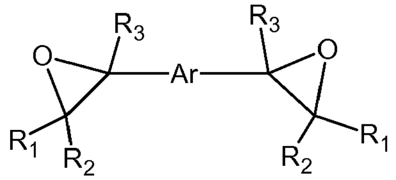

Structure IV

In the above Structures I, II, III, and IV of the vinylarene oxide comonomer of the present invention, each $R_1$, $R_2$, $R_3$ and $R_4$ individually may be hydrogen, an alkyl, cycloalkyl, an aryl or an aralkyl group; or a $H_2O_2$-resistant group including for example a halogen, a nitro, an isocyanate, or an RO group, wherein R may be an alkyl, aryl or aralkyl; x is an integer of 0 to 4; y is an integer greater than or equal to 2; x+y is an integer less than or equal to 6; z is an integer of 0 to 6; and z+y is an integer less than or equal to 8; and Ar is an arene fragment including for example, 1,3-phenylene group. In addition, $R_4$ can be a reactive group(s) including epoxide, isocyanate, or any reactive group and z is an integer from 0 to 6 depending on the substitution pattern. Preferably, y = 2.

The vinylarene oxide used in the present invention may be produced, for example, by the process described in International Patent Application No. WO 2010/077483, by Marks et al.. The vinylarene oxide compositions that are useful in the present invention are also disclosed in, for example, U.S. Patent No. 2,924,580.

Preferably, the vinylarene oxide is a divinylarene dioxide. In another embodiment, the vinylarene oxide useful in the present invention preferably may comprise, divinylbenzene dioxide, divinylnaphthalene dioxide, divinylbiphenyl dioxide, divinyldiphenylether dioxide, or mixtures thereof.

In a preferred embodiment of the present invention, the vinylarene oxide used in the epoxy resin composition may be for example divinylbenzene dioxide (DVBDO). Most preferably, the vinylarene oxide component that is useful in the present invention includes, for example, a divinylbenzene dioxide as illustrated by the following chemical formula of Structure V:

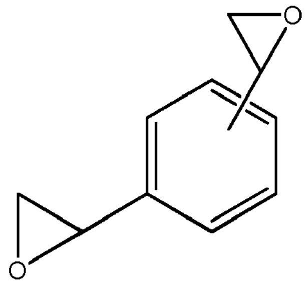

Structure V

The chemical formula of the above DVBDO compound of Structure V may be as follows: $C_{10}H_{10}O_2$; the molecular weight of the DVBDO may be about 162.2; and the elemental analysis of the DVBDO may be about as follows: C, 74.06; H, 6.21; and O, 19.73 with an epoxide equivalent weight of about 81 g/mol.

Vinylarene oxides, particularly those derived from divinylbenzene such as for example DVBDO, are a class of epoxides which have a relatively low liquid viscosity (e.g., <0.020 Pa-s at 25 °C) but have a higher rigidity and crosslink density (EEW ~ 81 g/mol) than conventional epoxy resins.

Structure VI below illustrates an embodiment of a preferred chemical structure of the DVBDO useful in the present invention:

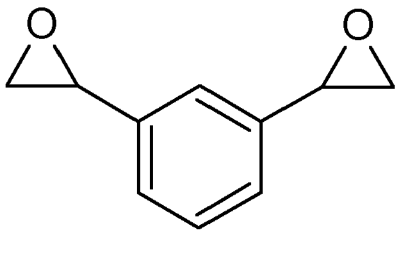

Structure VI

Structure VII below illustrates another embodiment of a preferred chemical structure of the DVBDO useful in the present invention:

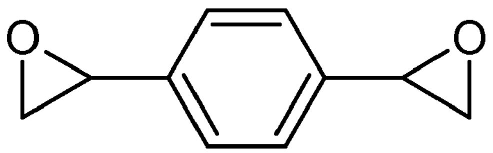

Structure VII

When DVBDO is prepared by the processes known in the art, it is possible to obtain one of three possible isomers: *ortho, meta,* and *para.* Accordingly, the present invention includes a DVBDO illustrated by any one of the above Structures individually or as a mixture thereof. Structures VI and VII above show the *meta* (1,3-DVBDO) and *para* isomers of DVBDO, respectively. The *ortho* isomer is rare; and usually DVBDO is mostly produced generally in a range of from 9:1 1 to 1:9 ratio of *meta* (Structure VI) to *para* (Structure VII) isomers. The present invention preferably includes as one embodiment a range of from 6:1 to 1:6 ratio of Structure VI to Structure VII, and in other embodiments the ratio of Structure VI to Structure VII may be from 4:1 to 1:4 or from 2:1 to 1:2.

In yet another embodiment of the present invention, the vinylarene oxide may contain quantities (such as for example less than 20 weight percent [wt %]) of substituted arenes. The amount and structure of the substituted arenes depend on the process used in the preparation of the vinylarene precursor to the vinylarene oxide. For example, divinylbenzene prepared by the dehydrogenation of diethylbenzene (DEB) may contain quantities of ethylvinylbenzene (EVB) and DEB. Upon reaction with hydrogen peroxide, EVB produces ethylvinylbenzene monoxide while DEB remains unchanged. The presence of these compounds can increase the epoxide equivalent weight of the vinylarene oxide to a value greater than that of the pure compound but can be utilized at levels of 0 to 99 % of the epoxy resin portion.

In one embodiment, the DVBDO used can be crude DVBDO, i.e. a DVBDO wherein DVBDO is less than 100% purity when manufactured. For example, a DVBDO that can be used herein includes a DVBDO product containing greater than 55% DVBDO, preferably greater than 80 %, and more preferably greater than 95 %.

In one embodiment, the vinylarene oxide useful in the present invention comprises, for example, DVBDO, a low viscosity liquid epoxy resin (e.g., 0.012 Pa-s at 25 °C). The viscosity of the vinylarene oxide used in the process of the present invention ranges generally from 0.001 Pa-s to 0.1 Pa-s, preferably from 0.01 Pa-s to about 0.05 Pa-s, and more preferably from 0.01 Pa-s to 0.025 Pa-s, at 25 °C.

The utility of the vinylarene oxides of the present invention requires thermal stability to allow formulating or processing the vinylarene oxides at moderate temperatures (for example, at temperatures of from 100 °C to 200 °C) for up to several hours (for example, for at least 2 hours) without oligomerization or homopolymerization. Oligomerization or homopolymerization during formulation or processing is evident by a substantial increase (e.g., greater than 50 fold) in viscosity or gelling (crosslinking). The vinylarene oxides of the present invention have sufficient thermal stability such that the vinylarene oxides do not experience a substantial increase in viscosity or gelling during formulation or processing at the aforementioned moderate temperatures.

Another advantageous property of the vinylarene oxide useful in the present invention is its rigidity. The rigidity property of the vinylarene oxide is measured by a calculated number of rotational degrees of freedom of the dioxide excluding side chains using the method of Bicerano described in Prediction of polymer Properties, Dekker, New York, 1993. The rigidity of the vinylarene oxide used in the present invention may range generally from 6 to 10, preferably from 6 to 9, and more preferably from 6 to 8 rotational degrees of freedom.

The concentration of the vinylbenzene oxide in the composition of the present invention will include a stoichiometric excess. The stoichiometric excess of vinylarene oxides used is determined using the number of epoxide equivalents or the number of moles depending on the class of curing agent used, as described below.

In general, the concentration of the vinylarene oxide used in the present invention as component (a) of the composition may range in terms of equivalent ratio of epoxide to curing agent generally from 0.1 to 3, preferably from 0.9 to 1.1, more preferably from 1.75 to 2.5, and even more preferably from 1.25 to 1.75. In one preferred embodiment of the composition of the present invention, divinylbenzene dioxide as component (a) may be used in terms of equivalent ratio of epoxide to curing agent from 1.0 to 1.05. If the composition of the present invention is formulated outside of the aforementioned ranges, the resultant product when cured would result in a thermoplastic polymer with limited utility in the intended applications.

The curing agent, component (b), useful for the curable epoxy resin composition of the present invention, may comprise any conventional curing agent known in the art for curing epoxy resins. The curing agents, (also referred to

as a hardener or cross-linking agent) useful in the curable composition, may be selected, for example, from those curing agents well known in the art including, but are not limited to, dicyandiamide, substituted guanidines, benzoxazine, amidoamines, polyamides, anhydrides, carboxylic acids, amine compounds, phenolic compounds, thiols, or mixtures thereof.

Examples of curing agents useful in the present invention may include any of the curing materials known to be useful for curing epoxy resin based compositions. Such curing agents include, for example, polyamine, polyamide, polyaminoamide, dicyandiamide, polyphenol, polymeric thiol, polycarboxylic acid and anhydride, and any combination thereof or the like. Other specific examples of curing agent include phenol novolacs, bisphenol-A novolacs, phenol novolac of dicyclopentadiene, cresol novolac, diaminodiphenylsulfone, styrene-maleic acid anhydride (SMA) copolymers; and any combination thereof. Among the conventional epoxy curing agents, amines and amino or amido containing resins and phenolics are preferred.

Preferably, the curable resin compositions of the present invention can be cured using various standard curing agents including for example amines, carboxylic acid anhydride, polyphenols, and mixtures thereof.

The amine curing agent may comprise any substituted or unsubstituted polyamine such as an ethylene amine exemplified by ethylenediamine, diethylenetriamine, triethylenetetramine, and aminoethylpiperazine; a cycloaliphatic amine such as isophoronediamine or methylenedicyclohexanamine; a benzylic amine such as xylylene diamine; an aromatic amine such as methylenedianiline and diethyltoluenediamine; and mixtures thereof. The stoichiometric ratio of vinylarene oxides is determined using the number of epoxide equivalents relative to the number of active hydrogen equivalents of the curing agent in the case of phenolics or amino functional curing agents.

The carboxylic acid anhydride curing agent may comprise any substituted or unsubstituted anhydride such as phthalic anhydride, tetrahydrophthalic anhydride, methyltetrahydrophthalic anhydride, nadic anhydride and mixtures thereof. The stoichiometric ratio of vinylarene oxides is determined using the number of moles of vinylarene oxide relative to the number of moles of anhydride curing agent.

The polyphenol curing agent may comprise any substituted or unsubstituted polyphenol such as a phenol novolac resin, a cresol novolac resin, and a bisphenol A novolac resin, a multi-phenolic compound such as cyclohexanetetraphenol, and a phenolic curing agent such as D.E.H. 80 (The Dow Chemical Company) phenolic resin, and optionally including a diphenol such as bisphenol A, and also optionally including a monophenol such as p-t-butylphenol. A particularly useful phenolic curing agent is Rezicure® 3700 (SI Group), an allyl substituted phenolic curing agent that is liquid (~3.0 Pa-s) at 25 °C. The stoichiometric ratio of vinylarene oxides is determined using the number of epoxide equivalents relative to the number of phenolic equivalents of the polyphenol curing agent.

Dicyandiamide may be one embodiment of the curing agent useful in the present invention. Dicyandiamide has the advantage of providing delayed curing since dicyandiamide requires relatively high temperatures for activating its curing properties; and thus, dicyandiamide can be added to an epoxy resin and stored at room temperature (about 25°C) and cured at elevated temperatures (e.g. >85 °C).

The thiol curing agent may comprise any substituted or unsubstituted polysulfide or polymercaptan compound. Specific examples of the compounds useful as the curing agent include the Thiokol LP series of polyalkylether thiols produced by Toray Fine Chemicals Co., Ltd. and Capcure LOF polymercaptan from Cognis Corp.

The level of curing agent, component (b), is generally used in an equivalent molar ratio of epoxide to curing agent (active hydrogen) between 0.2:4, depending on the type of curing agent that is used. Ratios outside of this range can result in low crosslink densities and poor material properties. If the composition of the present invention is formulated outside of the aforementioned ranges, the resultant product when cured would result in a thermoplastic polymer with limited utility in the intended applications.

The composition of the present invention may optionally include at least one conductive filler; and the filler is electrically conductive. Generally, the conductive filler has an electrical conductivity in the range of from $1x10^2$ S $m^{-1}$ to 1x10 S $m^{-1}$, preferably from $1x10^5$ S $m^{-1}$ to $1x10^7$ S $m^{-1}$; and most preferably greater than $1x10^6$ S $m^{-1}$. Preferred electrically conductive fillers include silver, palladium, gold, platinum, graphite, graphene, carbon nanotubes or blends thereof.

Alternatively, the conductive filler useful in the present invention may be electrically insulative and/or thermally conductive. For example, the conductive filler may exhibit a volume resistivity in a range of from $1x10^4$ ohm-cm to $1x10^{20}$ ohm-cm, preferably from $1x10^7$ ohm-cm to $1x10^{20}$ ohm-cm; and most preferably greater than $1x10^{13}$ ohm-cm, and may exhibit a thermal conductivity in the range of from 1 W/mK to 2000 W/mK, preferably from 70 W/mK to 2000W/mK; and most preferably greater than 350 W/mK.

The conductive filler, component (c), useful in the composition of the present invention include for example fillers such as silver, palladium, gold, platinum, graphite, graphene, carbon nanotubes, alumina, aluminum titanate, clay, talc, silica, calcium carbonate, aluminum trihydroxide, aluminum hydroxide oxide, boron nitride, aluminum nitride, silica coated aluminum nitride, silicon carbide, mica, aluminum powder, zinc oxide, or other organic or inorganic particulate filler, either added into the composition in their end state or formed *in-situ.* Preferably, the conductive filler, component (c) is chosen from silver, palladium, gold, platinum, graphite, graphene, carbon nanotubes, alumina, aluminum titanate,

clay, talc, silica, calcium carbonate, aluminum trihydroxide, aluminum hydroxide oxide, boron nitride, aluminum nitride, silica coated aluminum nitride, silicon carbide, mica, and aluminum powder.

The acceptable particle size range for the filler varies from nano to conventional micro size, such as for example, in the range of from 0.0005 μm to 500 μm. Acceptable filler morphologies may be any suitable ones, including, for example platelet, amorphous, spherical or any combination thereof.

Filler loadings can vary from 0.5 % by weight on solids to 95 % by weight, preferably from 10 % by weight to 90 % by weight; and more preferably from 50 % by weight to 80 % by weight on solids; or from 0. 5 % by vo lume to 70 % by volume, preferably from 10 % by vo lume to 5 0 % by vo lume; and more preferably from 25 % by volume to 40 % by volume.

The optional curing catalyst useful for the curable epoxy resin composition of the present invention may comprise any conventional catalyst known in the art for effecting the reaction between a curing agent and an epoxy resin. The catalysts, useful in the curable composition, may be selected, for example, from those catalysts well known in the art including, but are not limited to, tertiary amines, imidazoles, quaternary ammonium salts, quaternary phosphonium salts, Lewis acid-Lewis base complexes, or mixtures thereof.

Preferably, the catalysts useful in the present invention include for example, a tertiary amine such as benzyldimethylamine; an imidazole such as 1-benzyl-2-methylimidazole; a quaternary ammonium salt such as tetrabutylammonium bromide; a phosphonium salt such as tetrabutylphosphonium bromide; Lewis acid-Lewis base complexes such as boron trichloride-ethylamine complex; and mixtures thereof.

In general, the epoxy resin composition of the present invention may include from 0.01 wt % to 20 wt % the catalyst. When present, the catalyst is preferably in an amount of from 0.05 wt % to 15 wt %; more preferably from 0.1 wt % to 10 wt %; even more preferably from 0.2 wt % to 7 wt %; and still more preferably from 0.5 wt % to 5 wt %. Using a catalyst concentration lower than that described in the above range, results in an insufficient rate and degree of cure of the composition, whereas using a catalyst concentration greater than that described in the above range, results in an undesirably fast rate of cure and/or a deleterious effect on the properties of the cured composition as a result of, for example, plasticization or phase separation.

Other optional components that may be useful in the present invention are components normally used in resin compositions known to those skilled in the art. For example, the optional components may comprise compounds that can be added to the composition to enhance application properties (e.g. surface tension modifiers or flow aids), reliability properties (e.g. adhesion promoters), reaction rate, selectivity of the reaction, and/or catalyst lifetime.

An assortment of optional additives that may be added to the curable compositions of the present invention include for example, other resins such as epoxy resins that are different from the divinylarene dioxide, component (a); diluents; stabilizers; fillers other than component (c); plasticizers; catalyst de-activators; and the like; and mixtures thereof.

Still other optional additives useful in the composition of the present invention include for example a halogen containing or halogen free flame retardant; a synergist to improve the performance of the flame retardant ability such as for example magnesium hydroxide, zinc borate, or metalocenes; a solvent for process ability such as for example acetone, methyl ethyl ketone, or Dowanol PMA; an adhesion promoter such as for example modified organosilanes (epoxidized, methacryl, amino), acytlacetonates, or sulfur containing molecules; wetting and dispersing aids such as for example modified organosilanes, Byk 900 series, W 9010 or modified fluorocarbons; air release additives such as for example Byk A530, Byk A525, Byk A555, or Byk A 560; surface modifiers such as for example slip and gloss additives (a number from Byk-Chemie); a reactive or nonreactive thermoplastic resin such as for example polyphenylsulfones, polysulfones, polyethersolufones, polyvinylidene fluoride, polyetherimide, polypthalimide, polybenzimidiazole, acrylics, phenoxy, urethane, or mixtures thereof; mold release agents such as for example waxes; and other functional additives or prereacted products to improve polymer properties such as isocyanates, isocyanurates, cyanate esters, allyl containing molecules or other ethylenically unsaturated compounds, acrylates, or mixtures thereof.

The concentration of the optional components useful in the composition of the present invention may range generally from 0 wt % to 99.9 wt %, preferably from 0.001 wt % to 99 wt %, more preferably from 0.01 wt % to 98 wt %, and most preferably from 0.05 wt % to 95 wt %.

The preparation of the curable vinylarene oxide resin composition of the present invention is achieved by admixing (a) at least one vinylarene oxide, (b) at least one curing agent, and (c) at least one filler, and other optional components. The above components may be mixed in any order. Any of the above-mentioned optional assorted composition additives, for example catalysts, may also be added to the composition during the mixing or prior to the mixing to form the composition. In one embodiment, the vinylarene oxide, curing agent, and optional components are admixed prior to addition of the filler.

All the components of the curable vinylarene oxide resin composition are typically mixed and dispersed at a temperature enabling the preparation of an effective curable vinylarene oxide resin composition having a low viscosity (<~50 Pa-s at 25 °C at 10 $sec^{-1}$) for the desired application. The temperature during the mixing of all components may be generally from 0 °C to 100 °C and preferably from 20 °C to 70 °C. In one embodiment, the vinylarene oxide and curing agent are mixed until homogeneously dispersed or dissolved prior to addition of optional components and filler.

Compositions containing particulate filler are typically blended under vacuum in a Ross PD or DM type mixer (Charles Ross & Son). For improved dispersion, a three roll mill (Exakt Technologies) can also be utilized. Key properties of the blend include viscosity and pot life which is measured via a suitable rheometer (e.g. TA Instruments AR2000).

The curable composition comprising a vinylarene oxide, a curing agent, a filler, and optional components as described above has the following properties; a viscosity of less than 50 Pa-s at 25 °C at 10 $sec^{-1}$; viscosity stability of less than a 4x increase in viscosity over 10 hours at 25 °C.

The curable composition of the present invention can be cured under conventional processing conditions to form a thermoset. The resulting thermoset displays excellent thermo-mechanical properties, such as good toughness (e.g. > 1 MPa $m^{1/2}$) and mechanical strength (strength at break of e.g. >45 MPa), while maintaining high thermal stability.

The process to apply the thermoset products of the present invention may be performed by syringe dispensing, screen printing, stencil printing, gravity casting, vacuum casting, automatic pressure gelation (APG), vacuum pressure gelation (VPG), infusion, filament winding, lay up injection, transfer molding, prepreging, dipping, coating, spraying, brushing, and the like.

The curing reaction conditions include, for example, carrying out the curing reaction under a temperature, generally in the range of from 40 °C to 300 °C; preferably, from 50 °C to 275 °C; and more preferably, from 60 °C to 250 °C.

The pressure of the curing reaction may be carried out, for example, at a pressure of from 0.01 bar to 1000 bar, preferably from 0.1 bar to 100 bar; and more preferably from 0.5 bar to 10 bar.

The curing of the curable composition may be carried out, for example, for a predetermined period of time sufficient to partially cure or to completely cure the composition. For example, the curing time may be chosen from 1 minute to 24 hours, preferably from 10 minutes to 12 hours, and more preferably from 100 minutes to 8 hours.

The curing process of the present invention may be a batch or a continuous process. The reactor used in the process may be any reactor and ancillary equipment well known to those skilled in the art.

The cured or thermoset product prepared by curing the curable vinylarene oxide resin composition of the present invention advantageously exhibits an improved balance of thermo-mechanical properties (e.g. glass transition temperature, modulus, and toughness).

The curable vinylarene oxide resin composition of the present invention, when cured, is capable of providing a thermoset or cured product wherein the glass transition of the thermoset ranges generally from -55 °C to 300 °C; preferably, from -20 °C to 275 °C; and more preferably, from 0°C to 250 °C as measured using differential scanning calorimetry (DSC).

The curable vinylarene oxide resin compositions of the present invention are useful for the preparation of epoxy thermosets or cured products in the form of coatings, films, adhesives, laminates, composites, inks, and the like.

In the case of electrically conductive curable vinylarene oxide resin compositions of the present invention, the volume resistivity of the cured products can range from $1x10^{-7}$ ohm-cm to $1x10^{2}$ ohm-cm, more preferably from $1x10^{-7}$ ohm-cm to $1x10^{-1}$ ohm-cm, and most preferably less than $1x10^{-4}$ ohm-cm.

In the case of electrically insulative (dielectric) curable vinylarene oxide resin compositions of the present invention the volume resistivity is generally greater than $1x10^{5}$ ohm-cm and the thermal conductivity is greater than 1 W/mK, more preferably greater than 2.5 W/mK and most preferably greater than 5 W/mK.

The thermomechanical properties of the curable vinylarene oxide resin compositions of the present invention can be tuned for the specific application of interest. In one embodiment, the coefficient of thermal expansion (CTE) ranges from 20 ppm/°C to 40 ppm/°C with a Tg of 20 °C to 250 °C and a flexural modulus of 2.5 GPa to 12 GPa at 25 °C. Preferably, CTE ranges from 30 ppm/°C to 35 ppm/°C with a Tg of 70 °C to 120 °C and a flexural modulus of 5 GPa to 7 GPa at 25 °C. More preferably, the CTE ranges from 20 ppm/°C to 25 ppm/°C with a Tg of 90 °C to 110 °C and a flexural modulus of 6 GPa to 8 GPa at 25 °C.

As an illustration of the present invention, in general, the curable vinylarene oxide resin compositions may be useful for adhesives, inks, casting, potting, encapsulation, molding, and tooling. The present invention is particularly suitable for all types of electrical casting, potting, and encapsulation applications; for molding and plastic tooling; and for the fabrication of vinylarene oxide resin based composites parts, particularly for producing large epoxy resin-based parts produced by casting, potting and encapsulation. The resulting composite material may be useful in some applications, such as electrical casting applications or electronic encapsulations, castings, moldings, potting, encapsulations, injection, resin transfer moldings, composites, coatings and the like. In addition, the composition is particularly useful for use in semiconductor packaging applications including thermally conductive encapsulant, die attach, thermal interface materials, and dielectric compounds.

## EXAMPLES

In the following Examples, various terms and designations are used, such as for example:

"DVBDO" stands for divinylbenzene dioxide.

D.E.R.™ 332 is a low viscosity (4000-6000 cP @ 25 °C) bisphenol A based epoxy resin available from The Dow Chemical Company.

D.E.R.™ 354 is a low viscosity (3400-4200 cP @ 25 °C) bisphenol F based epoxy resin available from Dow Chemical.

Jeffamine D230 is a polyether amine curing agent commercially available from Huntsman.

Amicure PACM is methylenedicyclohexanamine, a primary, cycloaliphatic amine curing agent commercially available from Air Products.

Silver Flakes AA-0005, AA-4703, GA-0018, and SA-0201 are different grades commercially available from Metalor.

Silver Powder C-1284P is one of many grades commercially available from Metalor.

Silane Z-6040 is [1-(Glycidyloxy)-3-(trimethoxysilyl) propane], a glycidyl ether functional silane coupling agent commercially available from Dow Coming.

Examples 1-4

General Procedure for Preparing Samples

Samples were prepared using the same formulation described in Table I below except that four different silver flake products available from Metalor were used. Example 1 used AA-0005, Example 2 used AA-4703, Example 3 used GA-0018, and Example 4 used SA-0201. The samples were used to investigate the impact of silver flake selection on key properties of interest. Silver flake level was 68% by weight on solids. Metalor C-1284P silver powder was used in all four samples at a level of 10% by weight on solids. The amine curing agent was added at a 1.05:1 stoichiomteric balance of epoxide to amine and contained a 1:4 weight ratio of Jeffamine D230 to Amicure PACM. Ingredients were placed into a lidded 29.5 mL (1 oz) -plastic jar and blended at 3500 rpm for 60 seconds using a DAC-150 Speed Mixer distributed by FlackTek. The blended samples were degassed for 10 minutes under vacuum in a bell jar at 25 °C at less than about 3000 Pa.

Table I - Formulations

| ***Components*** | **Examples 1- 4** Formula Weight |
|---|---|
| DVBDO | 0.1310 |
| Jeffamine D230 | 0.0166 |
| Amicure PACM | 0.0664 |
| Silver Flake | 0.6800 |
| Silver Powder C-1284P | 0.1000 |
| Silane 6040 | 0.0060 |
| | 1 00 |
| ***Weigh Up, mass (g)*** | |
| DVBDO | 1.97 |
| Jeffamine D230 | 0.25 |
| Amicure PACM | 1.00 |
| Silver Flake | 10.20 |
| Silver Powder C-1284P | 1.50 |
| Silane 6040 | 0.09 |
| | 1500 |

Examples 1-5 and Comparative Examples A and B in Tables II - IV below were characterized using the following analytical techniques:

Volume Resistivity

Volume resistivity was analyzed according to ASTM D2739-97. Strips of sample were prepared on glass slides by attaching Scotch tape to the slides as spacers, filling sample into the gap, and then removing the tape. The glass slides were then cured in an oven for 45 minutes at 85 °C, followed by 1 hour at 175 °C. Sample volume was determined using calipers, and the resistivity was measured using an ohm meter with the two probes placed at either end of the strip of cured sample. The volume resistivity (ohm-cm) was calculated using the following equation:

$$(L \times W \times H \times \text{Resistivity})/\text{length}$$

Glass Transition Temperature

The glass transition temperature was determined according to ASTM E1356. Approximately 40 mg of each sample was placed into separate hermetic aluminum pans and analyzed via differential scanning calorimetry (DSC) using a TA Instruments Q200 calorimeter. The program consisted of three elements: ramp at 10 °C/minute from 20 °C to 270 °C, cool at 10 °C/minute from 270 °C to 20 °C, and a second ramp at 10 °C/minute from 20 °C to 270 °C. The first heating ramp cured the sample, while the second heating ramp was used to measure the glass transition of the cured sample. Universal Analysis software was utilized to determine the glass transition temperature (Tg) using the half extrapolated tangents method.

Viscosity

The viscosity was measured at a fixed shear rate of 10 $sec^{-1}$ using a TA Instruments AR 2000 rheometer fitted with a 60 mm 1° cone and plate geometry at 25 °C according to ASTM D4287.

Mass Loss

The weight loss during cure was determined according to ASTM E1131. Approximately 30 mg of each sample was placed into separate standard aluminum pans and analyzed via thermogravimetric analysis (TGA) using a TA Instruments Q50 analyzer. The program replicated the standard cure protocol with a ramp at 10 °C/minute from room temperature (~25 °C) to 85 °C, hold isothermal at 85 °C for 45 min, ramp at 10 °C/minute from 85 °C to 175 °C, and hold isothermal at 175 °C for 1 hour. The mass loss is recorded as a percent (%) loss from the original sample weight.

Table II below contains a summary of the data collected on the formulations prepared with various Metalor silver flake products for Examples 1 through 4.

Table II - Results

| Sample | Example 1 | Example 2 | Example 3 | Example 4 |
|---|---|---|---|---|
| **Silver Flake** (68% loading) | **AA-0005** | **AA-4703** | **GA-0018** | **SA-0201** |
| **Silver Powder** (10% loading) | **CP-1284P** | **CP-1284P** | **CP-1284P** | **CP-1284P** |
| **Volume Resistivity, Ω-cm** | **0.0002** | **0.0002** | **0.0002** | **0.0001** |
| **Tg, °C** (DSC, 10 °C/min ramp) | **176** | **174** | **177** | **181** |
| **Viscosity, Pa-s** (AR2000 rheometer, 25°C, 10 1/s) | **15** | **15** | **12** | **11** |
| **Mass Loss, %** (TGA, 30 mg) | **1.7** | **1.7** | **1.7** | **1.7** |

Example 5 and Comparative Examples A and B

General Procedure for Preparing Samples

Samples were formulated with DVBDO, D.E.R. 332 or D.E.R. 354 to explore the impact of epoxide selection on key properties of interest. Equivalent molar ratios of epoxide to curing agent were used for each sample. Silver flake (Metalor SA-0201) and silver powder (Metalor C-1284P) were added at a level of 68 % and 10 % by weight on solids, respectively. The amine curing agents were added at a 1.05:1 stoichiomteric balance of epoxide to amine and contained a 1:4 weight ratio of Jeffamine D230 to Amicure PACM. Ingredients were placed into a lidded 29.5 mL (1 oz)-plastic jar and blended at 3500 rpm for 60 seconds using a DAC-150 Speed Mixer distributed by FlackTek. The blended samples were degassed for 10 minutes under vacuum in a bell jar at 25 °C at less than 3000 Pa.

Table III - Formulation Matrix

| Components, mass fraction | Example 5 DVBDO | Comparative Example A D E R 354 | Comparative Example B D E R 332 |
|---|---|---|---|
| DVBDO | 0.1310 | 0.0000 | 0.0000 |
| D.E.R. 354 | 0.0000 | 0.1644 | 0.0000 |
| D.E.R. 332 | 0.0000 | 0.0000 | 0.1651 |
| Jeffamine D230 | 0.0166 | 0.0099 | 0.0098 |
| Amicure PACM | 0.0664 | 0.0397 | 0.0391 |
| Silver Flake SA-0201 | 0.6800 | 0.6800 | 0.6800 |
| Silver Powder C-1284P | 0.1000 | 0.1000 | 0.1000 |
| Silane 6040 | 0.0060 | 0.0060 | 0.0060 |
| | 1 0000 | 1 0000 | 1 0000 |
| ***Weigh Up, mass (g)*** | | | |
| DVBDO | 1.31 | 0.00 | 0.00 |
| D.E.R. 354 | 0.00 | 1.64 | 0.00 |
| D.E.R. 332 | 0.00 | 0.00 | 1.65 |
| Jeffamine D230 | 0.17 | 0.10 | 0.10 |
| Amicure PACM | 0.66 | 0.40 | 0.39 |
| Silver Flake SA-0201 | 6.80 | 6.80 | 6.80 |
| Silver Powder C-1284P | 1.00 | 1.00 | 1.00 |
| Silane 6040 | 0.06 | 0.06 | 0.06 |
| | 10 00 | 10 00 | 10 00 |

Similar analytical methods described in Example 1-4 were used to characterize the materials of Example 5 and Comparative Examples A and B. In addition, the coefficient of thermal expansion was determined for the samples of Example 5 and Comparative Examples A and B.

Coefficient of Thermal Expansion

The coefficient of thermal expansion was determined according to ASTM E831-06. Cylindrical cured sample slugs (diameter = 5 mm, height = 4 mm) were prepared by filling sample into silicone molds and curing in a Tetrahedron Model 1401 press according to the following standard cure procedure:

The samples were cured for 45 minutes at 85 °C, followed by 1 hour at 175 °C. The cured slugs were analyzed via thermomechanical analysis (TMA) utilizing a TA Instruments Q400 analyzer fitted with a 3 mm probe. The program consisted of a ramp at 10 °C/minute from 25 °C to 210 °C, hold isothermal at 210 °C for 10 minutes, cool at 10 °C/minutes from 210 °C to -30 °C, hold isothermal at -30 °C for 2 minutes, ramp at 10 °C/minute from -30 °C to 250 °C. Universal Analysis software was utilized to determine the coefficient of thermal expansion (CTE) below the Tg ($\alpha$1 CTE). Table IV below contains a summary of the data collected on the formulations. The data indicate a extraordinary decrease in viscosity and volume resistivity; and an increase in Tg when DVBDO (Example 5) is used versus D.E.R. 354 (Comparative Example A) or D.E.R. 332 (Comparative Example B).

Table IV - Results

| | Example 1 | Comparative Example A | Comparative Example B |
|---|---|---|---|
| **Silver Powder** (10% loading) | **CP-1284P** | **CP-1284P** | **CP-1284P** |
| **Resin Package** (D E R 354 = bis F, D E R 332 = bis A) | **DVBDO** | **D.E.R.354** | **D.E.R. 332** |
| **Volume Resistivity, Ω-cm** | **0.0001** | **2048** | **5148** |
| **Tg, °C** (DSC,10°C/min ramp) | **182** | **101** | **121** |
| **Viscosity, Pa-s** (AR2000 rheometer, 25°C, 10 1/s) | **11** | **61** | **25** |
| **Mass Loss, %** (TGA, 30 mg) | **2.1** | **0.4** | **0.4** |
| **α1 CTE, ppm/deg C** (TMA, 10 °C/min ramp) | **36** | **34** | **38** |

**Claims**

**1.** A conductive curable composition comprising: (a) at least one vinylarene oxide, (b) at least one curing agent, and (c) at least one conductive filler.

**2.** The composition of claim 1, further comprising (d) at least one catalyst.

**3.** The composition of claim 1, wherein the at least one conductive filler is electrically conductive.

**4.** The composition of claim 3, wherein the at least one conductive filler has an electrical conductivity in the range of from $1x10^2$ $Sm^{-1}$ to $1x10^7$ S $m^{-1}$.

**5.** The composition of claim 3 wherein the conductive filler is chosen from silver, palladium, gold, platinum, graphite, graphene, carbon nanotubes and blends thereof.

**6.** The composition of claim 1, wherein the at least one conductive filler is electrically insulative and thermally conductive.

**7.** The composition of claim 6, wherein the at least one conductive filler exhibits a volume resistivity in a range of from $1x10^4$ ohm-cm to $1x10^{20}$ ohm-cm and has a thermal conductivity in the range of from 1 W/mK to 2000 W/mK.

**8.** The composition of claim 1, wherein the vinylarene oxide is chosen from the group of divinylbenzene dioxide, divinylnaphthalene dioxide, divinylbiphenyl dioxide, divinyldiphenylether dioxide, and mixtures thereof.

**9.** The composition of claim 1, wherein the vinylarene oxide comprises divinylbenzene dioxide.

**10.** The composition of claim 1, wherein the curing agent comprises an amine, a carboxylic acid anhydride, a polyphenol, a substituted polyphenol, a thiol, or mixtures thereof.

**11.** The composition of claim 2, wherein the catalyst comprises a tertiary amine, an imidazole, an ammonium salt, a phosphonium salt, or mixtures thereof.

**12.** A process for preparing the composition of claim 1 comprising admixing: (a) the at least one vinylarene oxide, (b) the at least one curing agent, and (c) the at least one conductive filler.

**13.** The process of claim 11 further comprising the step of heating the mixture at a temperature of from 40 °C to 300 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61359540 A
- US 5929141 A
- EP 1701361 B1
- US 7405247 B
- US 7018701 B
- US 5575956 A
- WO 2010077483 A, Marks
- US 2924580 A


### Non-patent literature cited in the description


- Prediction of polymer Properties. Dekker, 1993